Europäisches Patentamt

(19) European Patent Office

Office européen des brevets

(11) Numéro de publication : **0 302 784 B1**

(12) **FASCICULE DE BREVET EUROPEEN**

(45) Date de publication du fascicule du brevet :
05.06.91 Bulletin 91/23

(51) Int. Cl.⁵ : **F16L 11/08**

(21) Numéro de dépôt : **88402006.6**

(22) Date de dépôt : **02.08.88**

(54) Conduites tubulaires flexibles stables en longueur sous l'effet d'une pression interne.

(30) Priorité : 03.08.87 FR 8710997

(43) Date de publication de la demande :
08.02.89 Bulletin 89/06

(45) Mention de la délivrance du brevet :
05.06.91 Bulletin 91/23

(84) Etats contractants désignés :
DE ES GB IT NL SE

(56) Documents cités :
WO-A-87/02116
DE-A- 1 650 142
FR-A- 2 142 764
US-A- 4 649 963

(73) Titulaire : COFLEXIP Société Anonyme
23 Avenue de Neuilly
F-75116 Paris (FR)

(72) Inventeur : Ochsner, Richard
13, rue Gambetta
F-93110 Rosny-Sous-Bois (FR)

(74) Mandataire : Nony, Michel et al
Cabinet NONY & CIE, 29, rue Cambacérès
F-75008 Paris (FR)

EP 0 302 784 B1

Jouve, 18, rue Saint-Denis, 75001 PARIS

## Description

La présente invention est relative à des conduites tubulaires flexibles stables en longueur sous l'effet d'une pression interne.

La présente invention est en particulier relative à des conduites tubulaires flexibles de transport de fluides sous pression, tels qu'en particulier les hydrocarbures produits lors de l'exploitation de puits sous-marins.

La société déposante fabrique et commercialise en grande longueur de telles conduites qui présentent des caractéristiques mécaniques élevées, notamment de résistance à la traction, à l'écrasement et à la pression interne du fluide transporté.

Ainsi la société déposante fabrique des conduites comportant essentiellement une gaine interne d'étanchéité, une armure de résistance à la traction composée habituellement de deux nappes croisées constituées chacune de fils disposés en hélice autour de la conduite avec un même angle d'armage, les fils des deux nappes étant enroulés avec des angles opposés par rapport à l'axe de la conduite, une armure de résistance à la pression comportant une ou plusieurs nappes de feuillard agrafé ou de fils profilés enroulés par spiralage sous un angle proche de 90° par rapport à l'axe de la conduite, et une gaine externe. Il s'agit de conduites de type "smooth-bore".

Les conduites de type "rough bore" comportent en outre, sous la gaine interne d'étanchéité, une armure de résistance à l'écrasement et à la pression extérieure constituée généralement par un enroulement hélicoïdal à faible pas d'un ou plusieurs profilés agrafables, notamment du feuillard d'acier.

Dans certains cas l'armure de résistance à la pression est supprimée et les fils des deux nappes d'armure sont alors posés à l'angle d'équilibre, soit à 55° par rapport à l'axe de la conduite.

Dans certaines applications, notamment dans le cas où les conduites utilisées pour la collecte d'hydrocarbures produits par des puits sous-marins doivent être ensouillées, c'est-à-dire disposées au fond d'une tranchée creusée dans le fond sous-marin, il est essentiel d'éviter un allongement axial notable de la conduite flexible en service sous l'effet de la pression interne du fluide transporté car un tel allongement axial entraîne une déformation de la conduite risquant de provoquer un désensouillage de celle-ci.

Des tentatives ont été faites pour proposer des conduites tubulaires flexibles présentant un allongement aussi faible que possible en service sous pression interne élevée.

Ainsi FR-A 2 557 254 décrit une conduite tubulaire flexible comportant une armure de résistance à la traction constituée d'au moins une paire de nappes d'armage généralement posées avec un angle d'armage compris entre 15 et 45° par rapport à l'axe de la conduite et une armure de résistance à la pression comportant une ou plusieurs couches de fils spiralées. Ce document prévoit d'utiliser des rapports déterminés entre les rigidités des fils des couches spiralées de l'armure de résistance à la pression et des nappes de fils constituant l'armure de résistance à la traction.

Dans le cas habituel où tous les fils sont en un même matériau, par exemple en acier, ce rapport se réduit à un rapport d'épaisseurs.

Si les modules d'élasticité des fils des couches spiralées et des fils des nappes d'armure de résistance à la traction sont identiques, l'on obtient un rapport d'épaisseurs élevé, (compris entre 2, 5 et 8) entre l'armure de résistance à la traction et l'armure de résistance à la pression, ce qui accroît notablement le poids linéaire de la conduite et donc son coût.

En outre, on ne peut tirer pleinement profit de la vitesse de fonctionnement des armeuses qui est dans la pratique nettement supérieure à la vitesse de fonctionnement d'une spiraleuse.

Il a par ailleurs été proposé dans FR-A 2 464 423 d'utiliser une armure constituée d'une pluralité de paires de nappes croisées de fils d'armage. Ce document ne donne cependant aucune solution constructive en vue d'assurer une stabilité demensionnelle notamment en sens axial de la conduite flexible sous l'action d'une pression interne. De plus, il prévoit la présence d'une ou plusieurs paires de nappes enroulées selon un angle proche de 90° par rapport à l'axe de la conduite, c'est-à-dire qu'il s'agit de fils spriralés avec les inconvénients mentionnés ci-dessus.

Les études effectuées par la société déposante montrent que lors d'une mise en pression interne d'une conduite flexible deux étapes de déformation axiale se produisent successivement.

On constate tout d'abord pour une montée en pression relativement faible par exemple jusqu'à 5 MPa une déformation axiale relativement importante résultant de manière inévitable de l'existence de jeux de fabrication entre les nappes de fils d'armure et du fait de la déformation de matériaux de remplissage éventuellement placés entre les couches d'armure.

Si des mesures constructives particulières ne sont pas prévues, il se produit alors une phase ultérieure de déformation qui peut être importante lorsque la pression interne est élevée ce qui est le cas dans les applications pratiques où des pressions de services peuvent atteindre des valeurs de plusieurs dizaines de MPa.

La présente invention se propose de réaliser une conduite tubulaire flexible qui, par des mesures constructives particulières, ne présente au cours de la deuxième phase de déformation mentionnée ci-dessus qu'une déformation faible ou nulle.

Les mesures préconisées par la présente invention permettent de réaliser des conduites qui, lors d'une mise en pression, peuvent présenter un raccourcissement au cours de la second phase de déformation, ce raccourcissement pouvant s'ajouter à un raccourcissement déjà obtenu au cours de la première phase de déformation ou compensant totalement ou partiellement un allongement qui se serait produit lors de la première phase de déformation.

En d'autres termes, l'invention permet de réaliser des conduites dont les variations dimensionelles, notamment en sens axial, peuvent être parfaitement contrôlées de manière à présenter un certain allongement lors de l'application d'une pression intérieure élevée, si un tel allongement est admissible, compte tenu des conditions d'utilisation, une stabilité dimensionnelle ou encore un raccourcissement contrôlé.

Ce but est atteint selon l'invention par le fait que la conduite tubulaire flexible comprend au moins deux paires de nappes de fils enroulés hélicoïdalement, c'est-à-dire à pas constant, ayant un comportement à l'allongement linéaire et élastique, les deux nappes d'une même paire étant composées de fils identiques posés selon un même angle d'armage mais en sens opposé, tous les fils étant posés selon l'un de deux angles d'armage l'un inférieur à 55° ($\alpha_a$) l'autre supérieur à 55° ($\alpha_b$) les fils d'au moins une paire de nappes présentant un même angle d'armage $\alpha_a$ tel que :

$$40° \leq \alpha_a \leq 53°$$

et les fils d'au moins une paire de nappes présentant un même angle d'armage $\alpha b$ tel que :

$$57° \leq \alpha_b \leq 70°$$

lesdites nappes étant agencées de manière à satisfaire la relation :

$$0,5 \; < \frac{R\rho}{R\rho o} < \; 2$$

avec :

$$R\rho = \frac{\sum_{i=1}^{i=n_a} \frac{(ka)i}{(\ell'a)i}}{\sum_{j=1}^{j=n_b} \frac{(kb)j}{(\ell'b)j}}$$

et :

$$R\rho o = \frac{\dfrac{2 \sin^2 \alpha b \; \cos^2 \alpha b}{Di} - \dfrac{\sin^4 \alpha b}{Dmb}}{\dfrac{\sin^4 \alpha a}{Dma} - \dfrac{2 \sin^2 \alpha a \; \cos^2 \alpha a}{Di}}$$

avec :

$n_a$ = nombre de paires de nappes armées à l'angle $\alpha_a$.

$n_b$ = nombre de paires de nappes armées à l'angle $\alpha_b$.

$ka_i$ (et respectivement $kb_j$) = rigidité à l'allongement axial des fils de chacune des paires de nappes d'armure i (et respectivement j) armées à l'angle $\alpha_a$ (et respectivement $\alpha_b$).

k étant défini par $k = T/\varepsilon$

où T est la tension dans le fil correspondant et $\varepsilon$ est l'allongement relatif du fil.

$\ell a_i$ (et respectivement $\ell'b_j$) = valeur moyenne de la largeur occupée par les fils, c'est-à-dire la largeur du fil mesurée dans la section droite du fil et dans le plan tangent au cylindre dessiné par la nappe d'armure augmentée du jeu entre deux fils successifs, cette largeur étant déterminée par :

$$\ell'k = \frac{\pi D_k \ x \ \cos \alpha k}{N_k}$$

où

Dk est le diamètre moyen de la couche de fils

αk est l'angle d'armage

Nk est le nombre de fils d'armage

Di es le diamètre interne de la première nappe de fils d'armage intérieure.

Dma est le diamètre moyen des $n_a$ paires de nappes armées selon l'angle $\alpha_a$

Dmb est le diamètre moyen des $n_b$ paires de nappes armées selon l'angle $\alpha_b$.

Pour des réalisations avantageuses de conduites selon l'invention le rapport $\frac{R\rho}{R\rho o}$ satisfait de préférence à la relation :

$$0,7 < \frac{R\rho}{R\rho o} < 1,7$$

et plus particulièrement à la relation :

$$1 < \frac{R\rho}{R\rho o} < 1,7$$

si l'on souhaite obtenir dans tous les cas un raccourcissement de la conduite flexible sous l'application d'une pression interne.

Dans un mode de réalisation particulier de l'invention il est prévu deux paires de nappes de fils d'armage la valeur Rρ étant alors définie par la relation suivante :

$$R\rho = \frac{ka}{kb} \times \frac{\ell b}{\ell a}$$

Si l'on utilise des fils plats jointifs où sensiblement jointifs de section rectangulaire ou méplate en un matériau unique linéairement élastique et avec des épaisseurs de fils pour les deux nappes internes et respectivement pour les deux nappes externes identiques, la conduite tubulaire flexible selon l'invention se caractérise par la relation suivaante :

$$0,5 < \frac{Re}{R\rho o} < 2$$

avec

$$Re = \frac{\sum_{i=1}^{i=na} eai}{\sum_{j=1}^{j=n_b} ebj}$$

Re étant le rapport épaisseurs des fils d'armures posés respectivement selon les angles αa et αb, eai et ebj étant les épaisseurs des nappes respectives posées selon les angles $\alpha_a$ et $\alpha_b$.

De préférence le rapport $\dfrac{Re}{R\rho o}$ satisfait à la relation :

$$0,7 < \frac{Re}{R\rho o} < 1,7$$

et en particulier :

$$1 < \frac{Re}{R\rho o} < 1,7$$

Les nappes de fils d'armage présentant l'angle d'armage le plus faible ($\alpha a$) sont avantageusement disposées à l'intérieur par rapport aux nappes de fils d'armage présentant l'angle d'armage ($\alpha b$) plus élevé pour dans tous les cas obtenir un raccourcissement au cours de la première phase de déformation.

En tant que fils d'armure selon l'invention, on peut utiliser des fils d'acier ou en matériaux composites par exemple constitués de fibres minérales telles que du verre ou du carbone, ou organiques, telles que des fibres aramides noyées dans une matrie de résine thermoplastique, telle qu'une résine polyamide, ou thermodurcissable telle qu'une résine époxy.

Selon l'invention les fils d'armure peuvent être constitués de torons ou de câbles réalisés à partir de fils d'acier.

Les fils d'armure peuvent également être constitués de fibres parallèles en matériau plastique, par exemple en polyester entourées d'une tresse ou d'une gaine.

Des gaines en matière plastique ou élastomérique peuvent être disposées entre les paires de nappes de fils ou les nappes d'une paire.

On peut selon l'invention réaliser aussi bien des structures de type smooth-bore que de type rough-bore.

Le dessin annexé illustre schématiquement une conduite selon l'invention.

Celle-ci comprend une gaine extérieure de protection 1 en matériau plastique ou élastomérique, une paire de nappes de fils d'armage 2, 3 posées selon l'angle $\alpha_b$, une paire de nappes de fils d'armage 4, 5 posées selon l'angle $\alpha_a$ et une gaine interne d'étanchéité 6 en un matériau plastique ou élastomérique. Dans l'exemple illustré d'une structure de type rough-bore, il est en outre prévu une armure intérieure 7, par exemple en feuillard agrafé, assurant la résistance à l'écrasement et à la pression extérieure.

On va ci-après décrire des exemples de réalisation de conduites tubulaires flexibles selon l'invention.

On a étudié cinq conduites tubulaires flexibles dont les caractéristiques sont reportées sur le tableau ci-après :

EP 0 302 784 B1

| : | : | Exemple 1 | : | Exemple 2 | : | Exemple 3 | : | Exemple 4 | : | Exemple 5 | : |
|---|---|---|---|---|---|---|---|---|---|---|---|
| : $\alpha_a$ | : | 40° | : | 40° | : | 43° | : | 43° | : | 50° | : |
| : $\alpha_b$ | : | 60° | : | 60° | : | 65° | : | 65° | : | 70° | : |
| : Di | : | 230,2 mm | : | 230,2 mm | : | 174,4 mm | : | 119,6 mm | : | 230,2 mm | : |
| : Dma | : | 234,2 mm | : | 234,2 mm | : | 180,4 mm | : | 125,6 mm | : | 238,2 mm | : |
| : Dmb | : | 244,2 mm | : | 244,2 mm | : | 190,4 mm | : | 136,60 mm | : | 250,2 mm | : |
| : ea1 | : | 0,88 mm | : | 2 mm | : | 3 mm | : | 3 mm | : | 2 mm | : |
| : ea2 | : | | : | | : | | : | | : | 2 mm | : |
| : eb | : | 3 mm | : | 2,15 mm | : | 2 mm | : | 2 mm | : | 1,04 mm | : |
| : Re | : | 0,293 | : | 0,93 | : | 1,5 | : | 1,5 | : | 3,846 | : |
| : R$\rho$o | : | 0,490 | : | 0,490 | : | 1,125 | : | 1,02 | : | 3,358 | : |
| : Re/R$\rho$o | : | 0,6 | : | 1,9 | : | 1,33 | : | 1,47 | : | 1,15 | : |

Les quatres premières conduites présentent une structure rough-bore correspondant à celle représentée dans la figure du dessin.

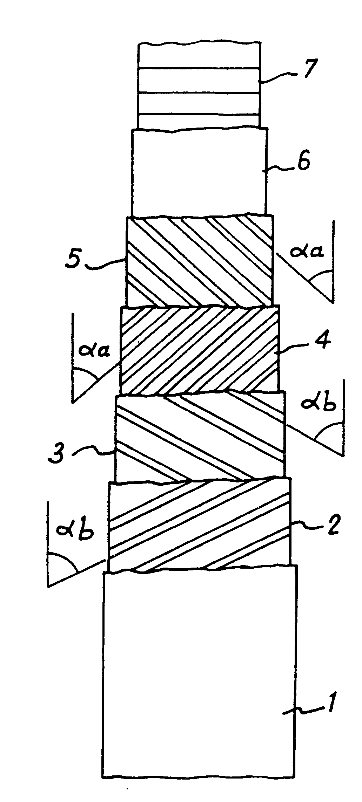

L'exemple de la figure 5 décrit également une structure rough-bore comportant sur la gaine d'étanchéité intérieure deux paires de nappes de fils d'armage posés selon le même angle $\alpha_a$.

Dans les exemple 1, 2 et 5 des gaines intermédiaires ont été rajoutées entre des paires de nappes de fils d'armage.

Les fils d'armage sont des fils d'acier haute résistance (limite élastique de l'ordre de 140 daN/mm$^2$) plats et sensiblement jointifs.

Après mise sous pression interne et à la suite de la première phase de déformation constituant essentiellement le rattrapage des jeux de fabrication, on a obtenu pour chacune des conduites tubulaires flexibles étudiées les variations relatives de longueur suivantes à une pression interne de 40 MPa.

Flexible 1 : + 3,8 × 10$^{-3}$
Flexible 2 : − 3,7 × 10$^{-3}$
Flexible 3 : − 1,2 × 10$^{-3}$
Flexible 4 : − 1,8 × 10$^{-3}$
Flexible 5 : − 1,3 × 10$^{-3}$

**Revendications**

1. Conduite tubulaire flexible comportant une gaine interne d'étanchéité (6), une armure (2, 3, 4, 5) constituée d'au moins deux paires de nappes de fils enroulés hélicoïdalement, les deux nappes d'une même paire étant composées de fils identiques posés selon un même angle d'armage mais en sens opposé, et une gaine externe de protection (1), caractérisée par le fait que tous les fils sont posés selon l'un de deux angles d'armage l'un inférieur à 55° ($\alpha_a$) l'autre à 55° ($\alpha_b$) les fils d'au moins une paire de nappes présentant un même angle d'armage $\alpha_a$ tel que :

$$40° \leqq \alpha_a \leqq 53°$$

et les fils d'au moins une paire de nappes présentant un même angle d'armage $\alpha_b$ tel que :

$$57° \leqq \alpha_b \leqq 70°$$

lesdites nappes étant agencées de manière à satisfaire la relation :

6

EP 0 302 784 B1

$$0,5 \quad < \quad \frac{R\rho}{R\rho o} \quad < \quad 2$$

avec :

$$R\rho = \frac{\sum_{i=1}^{i=n_a} \frac{(ka)i}{(\ell'a)i}}{\sum_{j=1}^{j=n_b} \frac{(kb)j}{(\ell'b)j}}$$

et :

$$R\rho_o = \frac{\frac{2 \sin^2\alpha_b \cos^2 \alpha_b}{Di} - \frac{\sin^4 \alpha_b}{Dmb}}{\frac{\sin^4 \alpha_a}{Dma} - \frac{2 \sin^2 \alpha_a \cos^2 \alpha_a}{Di}}$$

avec :

$n_a$ = nombre de paires de nappes armées à l'angle $\alpha_a$.

$n_b$ = nombre de paires de nappes armées à l'angle $\alpha_b$.

$ka_i$ (et respectivement $kb_j$) = rigidité à l'allongement axial des fils de chacune des paires de nappes d'armure i (et respectivement j) armées à l'angle $\alpha_a$ (et respectivement $\alpha_b$).

k étant défini par $k = T/\varepsilon$

où T est la tension dans le fil correspondant et $\varepsilon$ est l'allongement relatif du fil.

$\ell'a_i$ (et respectivement $\ell'b_j$) = valeur moyenne de la largeur occupée par les fils, c'est-à-dire la largeur du fil mesurée dans la section droite du fil et dans le plan tangent au cylindre dessiné par la nappe d'armure augmenté du jeu entre deux fils successifs, cette largeur étant déterminée par :

$$\ell'k = \frac{\pi D_k \times \cos \alpha_k}{N_k}$$

où

Dk est le diamètre moyen de la couche de fils

$\alpha$k est l'angle d'armage

$N_k$ est le nombre de fils d'armage

Di est le diamètre interne de la première nappe de fils d'armage intérieure.

Dma est le diamètre moyen des $n_a$ paires de nappes armées selon l'angle $\alpha_a$

Dmb est le diamètre moyen des $n_b$ paires de nappes armées selon l'angle $\alpha_b$.

2. Conduite tubulaire flexible selon la revendication 1, caractérisée par la relation suivante :

$$0,7 < \frac{R\rho}{R\rho o} < 1,7$$

3. Conduite tubulaire flexible selon l'une quelconque des revendications 1 et 2, caractérisée par la relation suivante :

7

$$1 < \frac{R\rho}{R\rho o} < 1{,}7$$

4. Conduite tubulaire flexible notamment selon la revendication 1 comportant des fils d'armage plats jointifs ou sensiblement jointifs de section rectangulaire ou méplate en un matériau unique linéairement élastique, caractérisée par la relation suivante :

$$0{,}5 < \frac{Re}{R\rho o} < 2$$

$$\text{avec} \quad Re = \frac{\sum_{i=1}^{i=na} e_{ai}}{\sum_{j=1}^{j=n_b} e_{bj}}$$

Re étant le rapport des épaisseurs des fils d'armage posés respectivement selon les angles $\alpha_a$ et $\alpha_b$, eai et ebj étant les épaisseurs des nappes respectives posées selon les angles $\alpha_a$ et $\alpha_b$.

5. Conduite tubulaire flexible selon la revendication 4, caractérisée par le fait que le rapport $\frac{Re}{R\rho o}$ satisfait à la relation :

$$0{,}7 < \frac{Re}{R\rho o} < 1{,}7$$

6. Conduite tubulaire flexible selon l'une quelconque des revendications 4 et 5, caractérisé par le fait que le rapport $\frac{Re}{R\rho o}$ satisfait à la relation :

$$1 < \frac{Re}{R\rho o} < 1{,}7$$

7. Conduite tubulaire flexible selon l'une quelconque des revendications précédentes, caractérisée par le fait qu'elle comporte deux paires de nappes de fils d'armage.

8. Conduite tubulaire flexible selon l'une quelconque des revendications précédentes caractérisée par le fait que les nappes de fils d'armage présentant l'angle d'armage le plus faible $\alpha_a$ sont disposées à l'intérieur par rapport aux nappes de fils d'armage présentant l'angle d'armage $\alpha_b$ plus élevé.

9. Conduite tubulaire flexible selon l'une quelconques des revendications précédentes, caractérisée par le fait qu'elle comporte en outre sous la gaine d'étanchéité une armure (7) de résistance à l'écrasement et à la pression extérieure constituée par un enroulement hélicoïdal à faible pas d'un ou plusieurs profilés agrafables.

## Ansprüche

1. Flexible Rohrleitung mit einem inneren Dichtungsmantel (6), einer Armierung (2, 3, 4, 5), die von mindestens zwei Paaren von Lagen aus schraubenförmig gewickelten Fäden gebildet ist, wobei die beiden Lagen desselben Paares aus identischen Fäden bestehen, die unter demselben Aufbringwinkel, jedoch in entgegengesetztem Sinn aufgebracht sind, und einem äußeren Schutzmantel (1), dadurch gekennzeichnet, daß sämtliche Fäden unter einem von zwei Aufbringwinkeln angeordnet sind, wobei der eine ($\alpha_a$) unter 55° und der andere ($\alpha_b$) über 55° liegt, wobei die Fäden mindestens eines Paares von Lagen denselben Aufbringwinkel $\alpha_a$ von

$$40° \leq \alpha_a \leq 53°$$

und die Fäden mindestens eines Paares von Lagen denselben Aufbringwinkel $\alpha_b$ von

$$57° \leq \alpha_b \leq 70°$$

aufweisen, wobei die Lagen derart ausgeführt sind, daß sie folgende Beziehung erfüllen :

$$0{,}5 < \frac{R\rho}{R\rho o} < 2$$

mit

$$R\rho = \frac{\sum_{i=1}^{i=n_a} \frac{(ka)i}{(\ell'a)i}}{\sum_{j=1}^{j=n_b} \frac{(kb)j}{(\ell'b)j}}$$

sowie

$$R\rho o = \frac{\dfrac{2 \sin^2\alpha_b \cos^2\alpha_b}{Di} - \dfrac{\sin^4\alpha_b}{Dmb}}{\dfrac{\sin^4\alpha_a}{Dma} - \dfrac{2 \sin^2\alpha_a \cos^2\alpha_a}{Di}}$$

mit

$n_a$ = Anzahl der Paare von unter dem Winkel $\alpha_a$ aufgebrachten Lagen ;

$n_b$ = Anzahl der Paare von unter dem Winkel $\alpha_b$ aufgebrachten Lagen ;

$ka_i$ (bzw. $kb_j$) = Steifigkeit der Fäden jedes der Paare von unter dem Winkel $\alpha_a$ (bzw. $\alpha_b$) aufgebrachten Armierungslagen i (bzw. j) gegen axiale Dehnung ;

k definiert ist als k = T/ε, wobei T die Spannung in dem betreffenden Faden und ε die relative Dehnung des Fadens ist ;

$\ell'a_i$ (bzw. $\ell'b_j$) = Mittelwert der von den Fäden eingenommenen Breite, d.h. der Breite des Fadens gemessen in einem zu dem Faden rechtwinkligen Schnitt in der Tangentialebene zu dem von der Armierungslage beschriebenen Zylinder, erhöht um den Abstand zwischen zwei aufeinanderfolgenden Fäden, wobei diese Breite bestimmt ist durch

$$\ell'k = \frac{\pi Dk \cdot \cos\alpha k}{N_k}$$

mit

Dk = mittlerer Durchmesser der Fadenschicht,

$\alpha k$ = Aufbringwinkel,

$N_k$ = Anzahl der aufgebrachten Fäden,

Di = Innendurchmesser der ersten Fadenlage der inneren Armierung ;

Dma = mittlerer Durchmesser der $n_a$ Paare von unter dem Winkel $\alpha_a$ aufgebrachten Lagen ;

Dmb = mittlerer Durchmesser der $n_b$ Paare von unter dem Winkel $\alpha_b$ aufgebrachten Lagen.

2. Flexible Rohrleitung nach Anspruch 1, gekennzeichnet durch die folgende Beziehung :

$$0{,}7 < \frac{R\rho}{R\rho o} < 1{,}7.$$

3. Flexible Rohrleitung nach Anspruch 1 oder 2, gekennzeichnet durch die folgende Beziehung :

9

$$1 < \frac{R\rho}{R\rho o} < 1{,}7.$$

4. Flexible Rohrleitung, insbesondere nach Anspruch 1, umfassend flache aneinanderstossende oder im wesentlichen aneinanderstossende Armierungsfäden mit rechteckigem oder halbflachem Querschnitt aus einem einzigen, linear elastischen Material, gekennzeichnet durch die folgende Beziehung :

$$0{,}5 < \frac{Re}{R\rho o} < 2$$

mit

$$Re = \frac{\sum_{i=1}^{i=n_a} e_{ai}}{\sum_{j=1}^{j=n_b} e_{bj}}$$

wobei Re das Dickenverhältnis der unter dem Winkel $\alpha_a$ bzw. $\alpha_b$ aufgebrachten Armierungsfäden ist, und $e_{ai}$ und $e_{bj}$ die Dicken der unter dem Winkel $\alpha_a$ bzw. $\alpha_b$ aufgebrachten Lagen sind.

5. Flexible Rohrleitung nach Anspruch 4, dadurch gekennzeichnet, daß das Verhältnis $\frac{Re}{R\rho o}$ die Beziehung erfüllt :

$$0{,}7 < \frac{Re}{R\rho o} < 1{,}7.$$

6. Flexible Rohrleitung nach Anspruch 4 oder 5, dadurch gekennzeichnet, daß das Verhältnis $\frac{Re}{R\rho o}$ die Beziehung erfüllt :

$$1 < \frac{Re}{R\rho o} < 1{,}7.$$

7. Flexible Rohrleitung nach einem der vorhergehenden Ansprüche, dadurch gekennzeichnet, daß sie zwei Paare von Lagen aus Armierungsfäden aufweist.

8. Flexible Rohrleitung nach einem der vorhergehenden Ansprüche, dadurch gekennzeichnet, daß die Lagen von Armierungsfäden, die den kleineren Aufbringwinkel $\alpha_a$, aufweisen, unter den Lagen aus Armierungsfäden angeordnet sind, die den größeren Aufbringwinkel $\alpha_b$ aufweisen.

9. Flexible Rohrleitung nach einem der vorhergehenden Ansprüche, dadurch gekennzeichnet, daß sie unter dem Dichtungsmantel noch eine gegen Zusammenquetschen und äusseren Druck feste Armierung (7) aufweist, die aus einer schraubenförmigen Wicklung geringer Steigung oder mehreren verklammerbaren Profilen besteht.

## Claims

1. A flexible tubular pipe having an inmer liquidtight sheath (6), an armour (2, 3, 4, 5) consisting of at least two pairs of layers of spirally wound wires, the two layers of one and the same pair being composed of identical wires laid at one and the same armouring angle but in opposite senses, and an outer protective sheath (1), characterized by the fact that all of the wires are laid at one of two armouring angles, one being less than 55° ($\alpha_a$), the other greater than 55° ($\alpha_b$), the wires of at least one pair of layers exhibiting one and the same armouring angle $\alpha_a$ such that :

$$40° \le \alpha_a \le 53°$$

and the wires of at least one pair of layers exhibiting one and the same armouring angle $\alpha_b$ such that :

$$57° \le \alpha_a \le 70°$$

the said layers being arranged so as to satisfy the relationship :

$$0,5 < \frac{R\rho}{R\rho_0} < 2$$

with :

$$R\rho = \frac{\sum_{i=1}^{i=n_a} \frac{(ka)i}{(\ell'a)i}}{\sum_{j=1}^{j=n_b} \frac{(kb)j}{(\ell'b)j}}$$

and :

$$R\rho_0 = \frac{\dfrac{2 \sin^2\alpha b \cos^2 \alpha b}{Di} - \dfrac{\sin^4 \alpha b}{Dmb}}{\dfrac{\sin^4 \alpha a}{Dma} - \dfrac{2 \sin^2 \alpha a \cos^2 \alpha a}{Di}}$$

with :
$n_a$ = number of pairs of layers armoured at the angle $\alpha_a$ ;
$n_b$ = number of pairs of layers armoured at the angle $\alpha_b$ ;
$ka_i$ (and respectively $kb_j$) = rigidity against axial elongation of the wires of each of the pairs of layers of armour i (and respectively j) armoured at the angle $\alpha_a$ (and respectively $\alpha_b$) ;
k being defined by k = T/ε
where T is the tension in the corresponding wire
and ε is the relative elongation of the wire ;
$'a_i$ (and respectively $'b_j$) = the mean value of the width occupied by the wires, that is to say, the width of the wire measured in the cross-section of the wire and in the tangent plane to the cylinder drawn by the layer of armour increased by the clearance between two successive wires, this width being determinad by :

$$\ell'k = \frac{\pi Dk \times \cos \alpha k}{N_k}$$

where
Dk is the mean diameter of the layer of wire ;
αk is the armouring angle ;
Nk is the number of armouring wires ;
Di is the internal diameter of the first layer of inner armouring wires ;
Dma is the mean diameter of the $n_a$ pairs of layers armoured at the angle $\alpha_a$ ;
Dmb is the mean diameter of the $n_b$ pairs of layers armoured at the angle $\alpha_b$ ;

2. A flexible tubular pipe as in Claim 1, characterized by the following relationship :

$$0.7 < \frac{R\rho}{R\rho o} < 1.7$$

3. A flexible tubular pipe as in either of the Claims 1 or 2, characterized by the following relationship :

$$1 < \frac{R\rho}{R\rho o} < 1.7$$

4. A flexible tubular pipe especially as in Claim 1, including flat contiguous armouring wires or substantially contiguous armouring wires of rectangular or flat section, of a single linearly elastic material, characterized by the following relationship :

$$0.5 < \frac{Re}{R\rho o} < 2$$

with

$$Re = \frac{\sum_{i=1}^{i=n_a} e_{ai}}{\sum_{j=1}^{j=n_b} e_{bj}}$$

Re being the ratio between the thicknesses of the armouring wires laid respectively at the angles $\alpha_a$ and $\alpha_b$, and eai and ebj being the thicknesses of the respective layers laid at the angles $\alpha_a$ and $\alpha_b$.

5. A flexible tubular pipe as in Claim 4, characterized by the fact that the ratio $\frac{Re}{R\rho o}$ satisfies the relationship:

$$0.7 < \frac{Re}{R\rho o} < 1.7$$

6. A flexible tubular pipe as in either of the Claims 4 or 5, characterized by the fact the ratio $\frac{Re}{R\rho o}$ satisfies the relationship :

$$1 < \frac{Re}{R\rho o} < 1.7$$

7. A flexible tubular pipe as in any one of the preceding Claims, characterized by the fact that it includes two pairs of layers of armouring wires.

8. A flexible tubular pipe as in any one of the preceding Claims, characterized by the fact that the layers of armouring wires which exhibit the smaller armouring angle $\alpha_a$ are arranged inside with respect to the layers of armouring wires which exhibit the greater armouring angle $\alpha_b$.

9. A flexible tubular pipe as in any one of the preceding Claims, characterized by the fact that it includes in addition under the liquidtight sheath an armour (7) resistant to crusching and external pressure, consisting of a spiral winding of small pitch of one or more interlocking sections.